# EUROPÄISCHE PATENTSCHRIFT

(11) **EP 2 544 918 B1**
(45) Veröffentlichungstag und Bekanntmachung des Hinweises auf die Patenterteilung: **17.06.2015**
(21) Anmeldenummer: 11707793.3
(22) Anmeldetag: 24.02.2011
(51) Int. Cl.: B60N 2/20, B60N 2/12

(54) **BESCHLAG FÜR EINEN FAHRZEUGSITZ**
FITTING FOR A VEHICLE SEAT
FERRURE POUR UN SIÈGE DE VÉHICULE

(30) Priorität: 11.03.2010 DE 102010011323
(43) Veröffentlichungstag der Anmeldung: 16.01.2013
(73) Patentinhaber: Johnson Controls Components GmbH & Co. KG, 67657 Kaiserslautern (DE)
(72) Erfinder: THIEL, Peter, 42899 Remscheid (DE)
(74) Vertreter: Liedhegener, Ralf
(86) Internationale Anmeldenummer: PCT/EP2011/000912
(87) Internationale Veröffentlichungsnummer: WO 2011/110288

(56) Entgegenhaltungen:
- DE-B4- 10 206 304

## Beschreibung

Die Erfindung betrifft einen Beschlag für einen Fahrzeugsitz, insbesondere für einen Kraftfahrzeugsitz, mit den Merkmalen des Oberbegriffs des Anspruches 1.

Aus der DE 102 06 304 B4 ist ein Beschlag dieser Art für ein zweitüriges Kraftfahrzeug bekannt, welcher dazu dient, durch das vorwärts erfolgende Freischwenken der Lehne (beispielsweise in Kombination mit einem Vorschieben des Fahrzeugsitzes) den Zugang zum Fond zu ermöglichen und für den Gebrauch durch einen Insassen verschiedene Neigungseinstellungen der Lehne zur Verfügung zu stellen. Um ein ungewolltes Zurückschwenken der Lehne, beispielsweise bei einer zu starken Polsterung im Übergangsbereich zwischen der Lehne und dem Sitzteil, zu verhindern, ist in der freigeschwenkten Stellung eine Festlegung der Lehne mittels einer Klinke vorgesehen. Dabei ist ein an der Sitzteilstruktur befestigbares Unterteil, ein relativ zum Unterteil verdrehbares Oberteil für die Neigungseinstellung der Lehne des Fahrzeugsitzes zwischen mehreren Gebrauchsstellungen und ein an der Lehnenstruktur befestigbares, mit dem Oberteil verriegelbares und für ein zentrisches Freischwenken der Lehne relativ zum Oberteil verschwenkbares Freischwenkteil vorgesehen, welches in der freigeschwenkten Stellung an einem Sicherungselement festlegbar ist, das mit dem Oberteil verbunden ist, wobei am Freischwenkteil eine um einen Lagerbolzen schwenkbare Sicherungsklinke vorgesehen ist, welche zum Festlegen des Freischwenkteils in der freigeschwenkten Stellung mit dem Sicherungselement zusammenwirkt, wobei die Sicherungsklinke aus einem einen Verriegelungsbereich aufweisenden Bauteil und einem auf dem Lagerbolzen gelagerten Bauteil besteht, und wobei ein elastisches Element vorgesehen ist, welches kraftgesteuert die Anordnung der Sicherungsklinke relativ zum Sicherungselement ändert. Hierbei ist das Sicherungselement drehbar am Oberteil gelagert und gegen Verdrehen relativ zum Unterteil gesichert. Ferner ist das elastische Element zwischen dem den Verriegelungsbereich aufweisenden Bauteil und dem auf dem Lagerbolzen gelagerten Bauteil der Sicherungsklinke wirksam.

Die DE 10 2005 024 939 A1 offenbart eine Klinkenanordnung mit einer einteiligen Klinke, welche eine beschlagunterteilfeste Schwenkachse aufweist, wobei als Gegenelement ein Bolzen vorgesehen ist, auf dem eine drehbar gelagerte Rolle sitzt.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Durch das Vorsehen einer Klinkenanordnung anstelle einer einfachen Klinke lassen sich durch eine Veränderung der Geometrie bewirkte Kräfte- und Drehmomentwirkungen auf vorteilhafte Weise nutzen.

Hierbei werden insbesondere bevorzugt mögliche Haftreibungskräfte durch das Vorsehen von rollenden anstelle von gleitenden Bewegungsabläufen zwischen Klinke und Gegenelement minimiert.

Die Klinke ist mittels eines auf die Lehne einwirkenden Momentes zu öffnen, wie es beim Zurückschwenken der Lehne oder Zurückschieben des Fahrzeugsitzes und Erreichen der zuvor eingestellten Sitzlängsposition vorhanden ist. Gegenüber einer erneuten Betätigung des Freischwenk-Bedienelementes vereinfacht dies die Handhabung, und gegenüber einer Ansteuerung mittels des Längseinstellers vereinfacht sich die Konstruktion. Da die freigeschwenkte Stellung nicht bei einem fahrenden Fahrzeug auftritt, braucht keine Crashsicherheit der kraftschlüssig gesicherten Festlegung gewährleistet zu werden. Ein Festlegen am Beschlagunterteil hat den Vorteil, dass die freigeschwenkte Stellung von der eingestellten Neigung der Lehne nahezu vollständig (bis auf den Eingriffswinkel der Klinke) unabhängig ist.

Während des Freischwenkens der Lehne kann eine Klinke der Klinkenanordnung bei Erreichen des Gegenelementes mit der weiteren Schwenkbewegung der Lehne leicht aufschwenken und - beispielsweise auf der Unterseite des Gegenelementes - an diesem entlang gleiten, bis sie nach dem Passieren des Gegenelementes das Gegenelement hintergreift. Die Klinke und das Gegenelement wirken vorzugsweise innerhalb des Selbsthemmungsbereichs zusammen. Die Selbsthemmung geht nach Steigerung der Last in öffnender Richtung in den nicht selbsthemmenden Bereich über. Hierbei ist das Gegenelement vorzugsweise mit einer zylinderförmigen Außenfläche, zumindest im Kontaktbereich mit der Klinke, ausgebildet. Insbesondere bevorzugt ist die Reibung in diesem Kontaktbereich minimiert. Dies erfolgt besonders bevorzugt dadurch, dass das Gegenelement einen Verriegelungsbolzen mit einem gleit- oder wälzlagergelagerten Ring aufweist, so dass im Kontaktbereich eine Rollbewegung und keine Gleitbewegung auftritt, wodurch die Reibung, insbesondere zu Beginn der Bewegung, minimiert werden kann. Das Gegenelement kann zugleich die Funktion eines Anschlags haben, der die Bereiche Komforteinstellung und Freischwenkweg begrenzt.

Der Einstellbeschlag weist vorzugsweise zwei Beschlagteile auf, die miteinander in Getriebeverbindung stehen, beispielsweise mittels eines selbsthemmenden Exzenterumlaufgetriebes, und die relativ zueinander verdrehbar sind. Alternativ sind die beiden Beschlagteile eines als Rastbeschlag ausgebildeten Einstellbeschlags mittels Riegel miteinander verriegelbar.

Die Erfindung ist vorzugsweise bei längseinstellbaren Fahrzeugsitzen von zweitürigen Kraftfahrzeugen mit zentrischem Freischwenken der Lehne einsetzbar, kann aber auch für andere Fahrzeugsitze verwendet werden. Bei einer Verwendung des erfindungsgemäßen Beschlags zur Aktivierung der sogenannten "Easy-Entry-Funktion", bei welcher außer einem Freischwenken der Lehne noch ein Verfahren des Fahrzeugsitzes erfolgt, kann das Zurückschwenken der Lehne genau bei Erreichen der zuvor eingestellten Sitzlängsposition erfolgen.

Die Erfindung kann identisch auch für memorisierte Beschlagsysteme bestehend aus zwei Rastbeschlägen und einer Freischwenkeinheit, wie beispielsweise in der WO 2009/143999 A1 offenbart, verwendet werden.

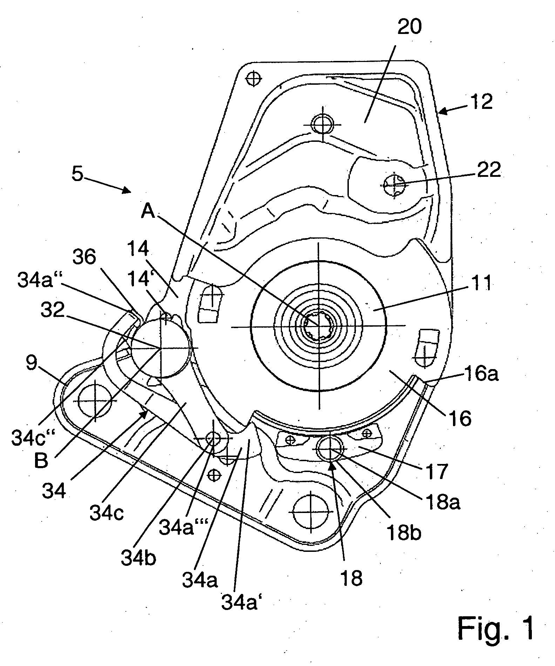

Im folgenden ist die Erfindung anhand zweier in der Zeichnung dargestellter Ausführungsbeispiele näher erläutert. Es zeigen
- Fig. 1: eine Ansicht des ersten Ausführungsbeispiels in der Gebrauchsstellung aus axialer Richtung,

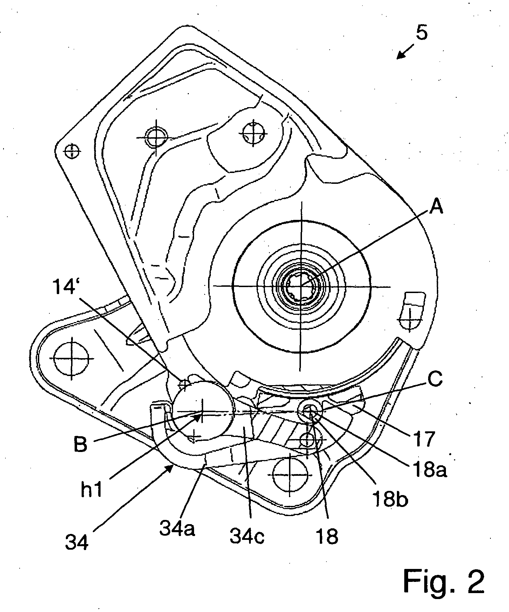

- Fig. 2: eine Ansicht des Ausführungsbeispiels entsprechend Fig. 1 in der freigeschwenkten, verriegelten Stellung,

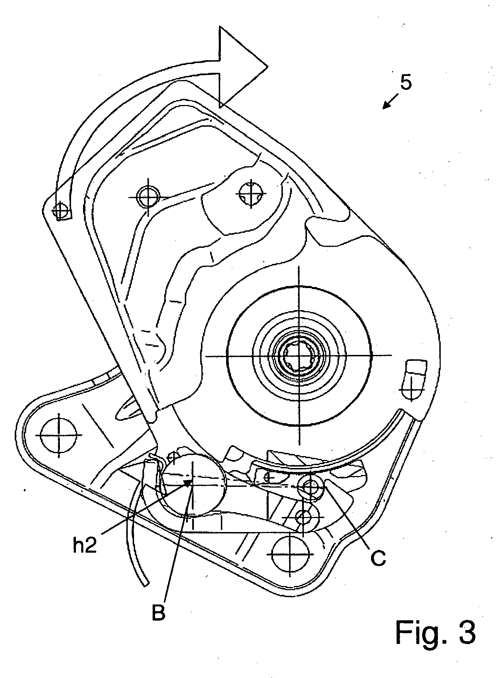

- Fig. 3: eine Fig. 2 entsprechende Ansicht in der freigeschwenkten Stellung, nachdem das Rückschwenken eingeleitet wurde, und
- Fig. 4: eine Detailansicht von Fig. 2,
- Fig. 5: eine Detailansicht von Fig. 3,

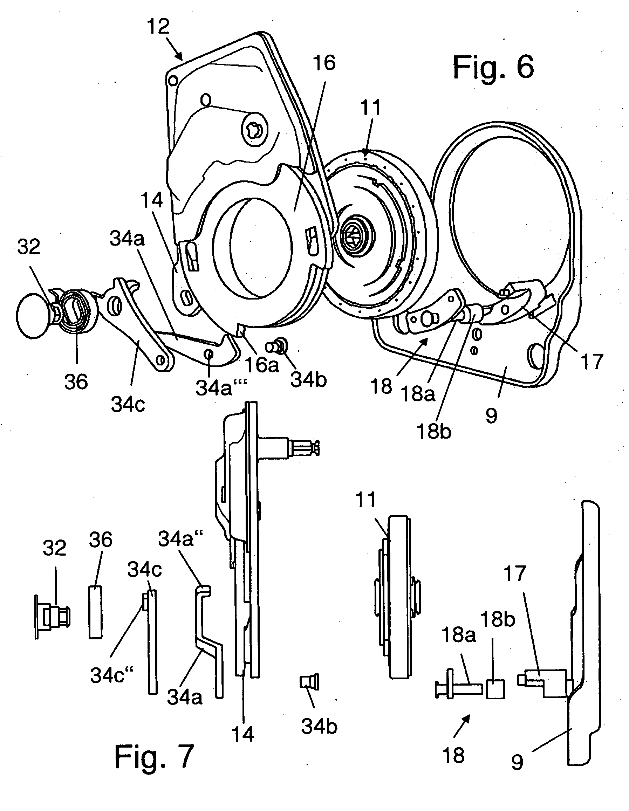

- Fig. 6: eine erste Explosionsdarstellung des Beschlags in perspektivischer Darstellung,
- Fig. 7: eine zweite Explosionsdarstellung des Beschlags von der Seite,
- Fig. 8: eine dritte Explosionsdarstellung des Beschlags aus einer weiteren Richtung,
- Fig. 9: eine schematische Seitenansicht eines Fahrzeugsitzes,
- Fig. 10: eine Ansicht des zweiten Ausführungsbeispiels in der Gebrauchsstellung aus axialer Richtung,
- Fig. 11: eine Ansicht des Ausführungsbeispiels entsprechend Fig. 10 in der freigeschwenkten, verriegelten Stellung,
- Fig. 12: eine Detailansicht von Fig. 11,
- Fig. 13: eine Fig. 11 entsprechende Ansicht in der freigeschwenkten Stellung, nachdem das Rückschwenken eingeleitet wurde,
- Fig. 14: eine Detailansicht von Fig. 13,
- Fig. 15: eine perspektivische Ansicht des Beschlags von Fig. 10 in der freigeschwenkten, verriegelten Stellung,
- Fig. 16: eine andere perspektivische Ansicht des Beschlags von Fig. 10 in der freigeschwenkten, verriegelten Stellung,
- Fig. 17: eine leicht perspektivische Explosionsdarstellung des Beschlags von Fig. 10,

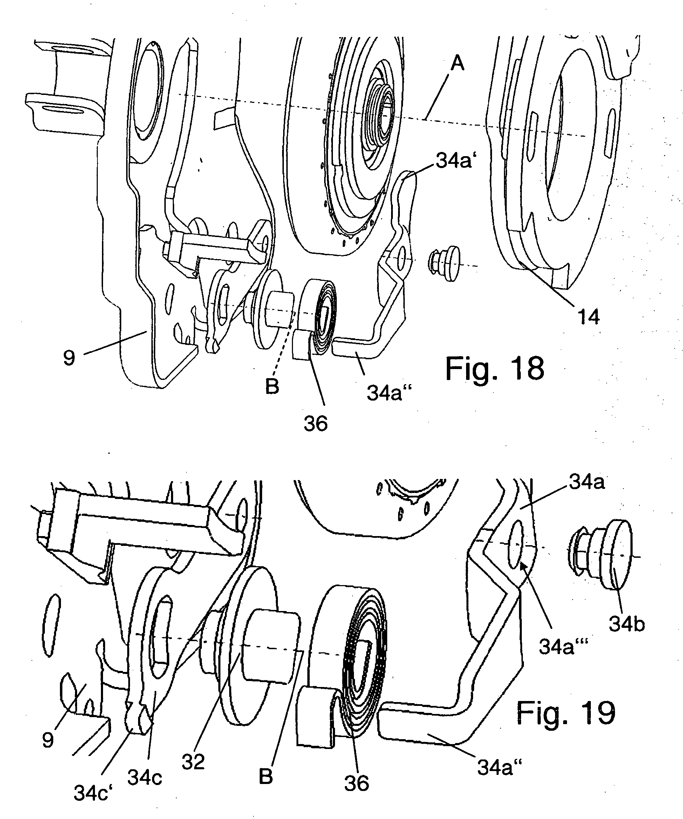

- Fig. 18: eine andere perspektivische Explosionsdarstellung des Beschlags von Fig. 10,
- Fig. 19: eine Detailansicht von Fig. 18,

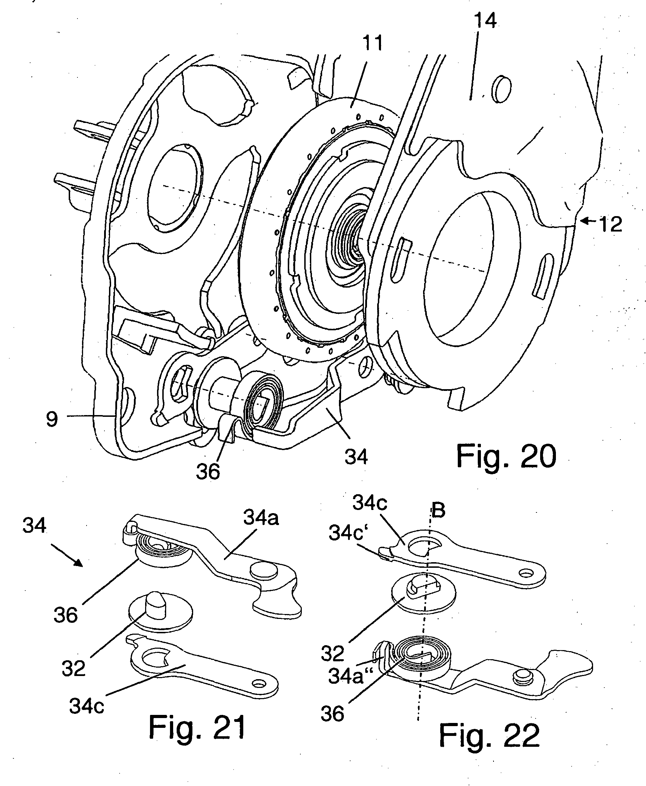

- Fig. 20: eine andere perspektivische Explosionsdarstellung des Beschlags von Fig. 10,
- Fig. 21: eine perspektivische Explosionsdarstellung wesentlicher Teile der Klinkenanordnung von Fig. 10, und
- Fig. 22: eine andere perspektivische Explosionsdarstellung wesentlicher Teile der Klinkenanordnung von Fig. 10.

Ein Fahrzeugsitz 1 für ein zweitüriges Kraftfahrzeug weist für die Neigungseinstellung seiner Lehne 2, d.h. die langsame, feine Winkeländerung zwischen mehreren Gebrauchsstellungen, und das Freischwenken, d.h. die schnelle, große Winkeländerung von einer Gebrauchsstellung in eine freigeschwenkte Stellung als einer speziellen Nichtgebrauchsstellung, relativ zu seinem Sitzteil 3 auf seinen beiden Seiten je einen Beschlag 5 auf. Auf der Außenseite des Fahrzeugsitzes 1 ist für die Neigungseinstellfunktion an einem der Beschläge 5 ein Handrad 7 und zwischen beiden Beschlägen 5 eine mit dem Handrad 7 verbundene Welle vorgesehen, während für die Freischwenkfunktion an der Lehne 2 ein Freischwenk-Bedienelement 8, beispielsweise ein Handhebel, beweglich angebracht ist.

Das Beschlagunterteil kann in einer Abwandlung des Ausführungsbeispiels auch integraler Bestandteil der Struktur des Sitzteils 3 sein.

Jeder Beschlag 5 umfasst ein Beschlagunterteil 9, das zur Befestigung des Beschlags 5 an der Struktur des Sitzteils 3 dient ("sitzteilfest"), einen Lehnenneigungseinstellbeschlag, im folgenden kurz als Einstellbeschlag 11 bezeichnet, und eine Freischwenkeinheit 12, welche ihrerseits ein Freischwenkteil 14 aufweist, das zur Befestigung des Beschlags 5 an der Struktur der Lehne 2 dient ("lehnenfest"). Auf das Beschlagunterteil 9 und das Freischwenkteil 14 wird aufgrund ihrer Funktion beim Freischwenken auch als Beschlagteile Bezug genommen.

Der Einstellbeschlag 11 ist in baulicher Hinsicht als eine scheibenförmige Einheit ausgebildet, wie sie beispielsweise in der DE 101 05 282 B4 oder der DE 20 2010 012 612 U1 beschrieben ist, deren diesbezüglicher Offenbarungsgehalt ausdrücklich einbezogen wird. Der Einstellbeschlag 11 weist zwei Besehlagteile auf, die relativ zueinander verdrehbar sind und mittels eines Umklammerungsrings in axialer Richtung zusammengehalten werden. Im Ausführungsbeispiel ist der Einstellbeschlag 11 als Getriebebeschlag ausgebildet, d.h. die beiden Beschlagteile des Einstellbeschlags 11 stehen mittels eines - vorliegend selbsthemmenden - Exzenterumlaufgetriebes miteinander in Getriebeverbindung, welches vorliegend ein spielfreies Feststellen der beiden Beschlagteile des Einstellbeschlags 11 ermöglicht und zum stufenlosen Verstellen eine Relativdrehung der beiden Beschlagteile des Einstellbeschlags 11 mit überlagerter Taumelbewegung erzwingt. Ein solcher Getriebebeschlag ist beispielsweise in der DE 44 36 101 A1 oder der DE 20 2010 012 621 U1 beschrieben, deren diesbezüglicher Offenbarungsgehalt ausdrücklich einbezogen wird. Die Drehung des Handrades 7 treibt den Getriebebeschlag an. Es sind aber auch andere Getriebebeschläge und auch Rastbeschläge, insbesondere memorisierte Rastbeschläge, als Einstellbeschlag 11 einsetzbar. In letzterem Fall entriegelt eine kleine Drehung des Handrades 7 oder eines ersatzweise vorgesehenen Hebels den Rastbeschlag. Das Innere eines solchen Rastbeschlags ist beispielsweise in der WO 00/44582 A1 oder der DE 20 2009 016 989 U1 beschrieben, deren diesbezüglicher Offenbarungsgehalt ausdrücklich einbezogen wird. Der Einstellbeschlag 11 ist mit einem seiner beiden Beschlagteile und dem Umklammerungsring fest mit dem Beschlagunterteil 9 verbunden, d.h. eines der beiden Beschlagteile des Einstellbeschlags 11 ist sitzteilfest. Hierzu weist das Beschlagunterteil 9 eine kreisrunde Aufnahme für den Einstellbeschlag 11 auf.

Die Freischwenkeinheit 12 weist ein - näherungsweise ringförmiges - Rastelement 16 auf, relativ zu welchem das Freischwenkteil 14 um eine Achse A drehbar gelagert ist, wobei das Rastelement 16 mit dem diesem zugewandten Beschlagteil des Einstellbeschlags 11 drehfest verbunden, vorliegend verschweißt, ist. Die Achse A und ihre Lage innerhalb des Fahrzeugsitzes 1 definieren die vorliegend verwendeten Richtungsangaben. Da die Achse A - gegebenenfalls abgesehen von der Taumelbewegung, mit der zentralen Achse des Einstellbeschlags 11 zusammenfällt, handelt es sich vorliegend um ein zentrischen Freischwenken. Ein Gegenelement 17 ist am Beschlagunterteil 9 befestigt und steht von diesem axial ab. Das Rastelement 16 weist an einem Teil seines Umfangs eine radial nach innen versetzte, durch je eine Stufe begrenzte Aussparung 16a auf, innerhalb derer das Gegenelement 17 angeordnet ist. Durch Zusammenwirken des Gegenelementes 17 mit den Stufen des Rastelements 16 wird der Winkeleinstellbereich für die Neigungseinstellung der Gebrauchsstellung der Lehne 2 begrenzt. Das Rastelement 16 (und damit die Freischwenkeinheit 12) ist fest mit demjenigen der beiden Beschlagteile des Einstellbeschlags 11 verbunden, das nicht sitzteilfest ist. Die Verbindung der Freischwenkeinheit 12 mit dem Einstellbeschlag 11 erfolgt beispielsweise durch Laserschweißen.

Für die Lagerung des Freischwenkteils 14 weist das Rastelement 16 vorliegend einen bezüglich der Achse A axial abstehenden Kragen auf, auf welchem das Freischwenkteil 14 drehbar gelagert ist. Ein mit dem Freischwenkteil 14 verbundener Deckel 20 definiert einerseits einen Bauraum zwischen sich und dem über das Rastelement 16 nach oben überstehenden Freischwenkteil 14. Anderseits ist der untere Rand des Deckels 20 als Halteklammer ausgebildet und übergreift, gegebenenfalls unter Zwischenlage eines Gleiters, z.B. aus Kunststoff, das Rastelement 16. Der Deckel 20 dient somit als weitere axiale Sicherung des Freischwenkteils 14.

Auf dem Freischwenkteil 14 ist mittels eines ersten Lagerbolzens 22 eine - vorliegend nicht dargestellte - Verriegelungsklinke schwenkbar gelagert, welche mit dem Rastelement 16 verriegelbar ist. Diese Verriegelungsklinke verriegelt die Lehne in den Gebrauchsstellungen, also den nicht freigeschwenkten Stellungen. Eine derartige Verriegelungsklinke ist beispielsweise aus der DE 10 2006 044 489 A1 bekannt, deren diesbezüglicher Offenbarungsgehalt ausdrücklich einbezogen wird. Die Anlage der Verriegelungsklinke und des Rastelementes 16 erfolgt in einem Winkel außerhalb des Selbsthemmungsbereichs. Die Verriegelungsklinke wird durch ein Fangelement und ein Spannelement gesichert, die vorliegend nicht dargestellt sind und deren Funktionsweise in der DE 44 39 644 A1 beschrieben ist, deren diesbezüglicher Offenbarungsgehalt ausdrücklich einbezogen wird. Das Spannelement liegt mit einer exzentrisch gekrümmten Spannfläche in einem Winkel außerhalb des Selbsthemmungsbereichs mit Vorspannung an der Verriegelungsklinke an. Dadurch ist das Freischwenkteil 14 spielfrei mit dem Rastelement 16 verriegelt. Das Fangelement ist im Normalfall in geringem Abstand (bezogen auf die Abmessungen der Verriegelungsklinke) zur Verriegelungsklinke angeordnet und stützt im Crashfall die Verriegelungsklinke ab.

Im vorliegenden Ausführungsbeispiel sind die beiden Beschläge 5 auf den beiden Fahrzeugsitzseiten leicht unterschiedlich ausgebildet, indem auf einer Fahrzeugsitzseite eine Festlegung der Lehne 2 in der freigeschwenkten Stellung vorgesehen ist. Im folgenden ist der Beschlag 5 auf der letztgenannten Fahrzeugsitzseite weiter beschrieben.

Bei diesem Beschlag 5 ist am Freischwenkteil 14 mittels eines zweiten Lagerbolzens 32 eine mehrteilige, knickhebelartig ausgebildete Klinkenanordnung 34 schwenkbar gelagert. Die Klinkenanordnung 34 weist eine Klinke 34a mit einem freien, hakenartig ausgebildeten Endbereich 34a', einem gegenüberliegenden Ende 34a", das mit einem Ende einer als Spiralfeder ausgebildeten Feder 36 in Verbindung steht und eine gelenkige Lagerstelle 34a'" auf, an welcher sie über einen Bolzen 34b mit einem die Klinke 34a tragenden Hebel 34c verbunden ist.

Der Hebel 34c ist verschwenkbar am freischwenkteilfesten Lagerbolzen 32 gelagert, auf dessen Schaft ferner die Feder 36 derart positioniert ist, dass das innere Ende der Feder 36 lagerbolzenfest angeordnet ist. Die Mittellängsachse des Lagerbolzens 32 bildet die Schwenkachse B des Hebels 34c. Der Hebel 34c weist am lagerbolzennahen Ende einen ersten Vorsprung 34c' in Gestalt eines nach außen stehenden Arms auf, welcher mit einem am Freischwenkteil 14 ausgebildeten Anschlag 14' zusammenwirken kann und welcher die Schwenkbewegung des Hebels 34c um den Lagerbolzen 32 in Richtung der Achse A begrenzt. Ferner weist der Hebel 34c einen zweiten Vorsprung 34c" in Gestalt eines weiteren nach außen stehenden Arms auf, der ebenfalls am lagerbolzennahen Ende etwas beabstandet vom ersten Vorsprung 34c' angeordnet ist. Dieser zweite Vorsprung 34c" kann mit dem federseitigen Ende 34a" der Klinke 34a zusammenwirken.

Die Klinkenanordnung 34 ist mittels der Feder 36 mit dem ersten Vorsprung 34c' des Hebels 34c gegen den Anschlag 14' vorgespannt und gleitet aufschwenkend mit ihrem freien Ende (Endbereich 34a' der Klinke 34a) während des Freischwenkens der Lehne 2 an vorstehenden Konturen des Gegenelementes 17 entlang.

Der Fahrzeugsitz 1 ist mittels eines Längseinstellers 41 längseinstellbar, d.h. in der Sitzlängsposition einstellbar. Der zwei Sitzschienenpaare aufweisende Längseinsteller 41 ist hierfür mittels eines Griffs 43 entriegelbar und verriegelt selbsttätig nach Loslassen des Griffs 43. Der Längseinsteller 41 wird aber auch beim Freischwenken der Lehne 2 entriegelt, so dass der Fahrzeugsitz 1 (mittels des Längseinstellers 41) nach vorne verfahrbar ist, um zusätzlich zum Freischwenken der Lehne 2 den Zugang zum Fond zu erleichtern. Das Entriegeln des Längseinstellers 41 erfolgt dabei direkt mittels des Freischwenk-Bedienelements 8 oder indirekt, indem beim Beschlag 5 auf der Fahrzeugsitzseite ohne Klinkenanordnung 34 ein Entriegelungsring vorsehen ist, welcher in an sich bekannter Weise beim Vorschwenken der Lehne 2 mitgenommen wird und dann mittels eines Bowdenzugs oder dergleichen die Verriegelung des Längseinstellers 41 ansteuert.

Das Freischwenken der Lehne 2, welches mittels des Freischwenk-Bedienelementes 8 ausgelöst wird, beginnt mit dem Entriegeln des Freischwenkteils 14 auf beiden Fahrzeugsitzseiten. Die nicht dargestellte Verriegelungsklinke wird aus dem Rastelement 16 ausgehoben. Mit der Schwenkbewegung der Lehne 2 nach vorne gleitet die Klinkenanordnung 34 mit ihrem freien Ende am Rastelement 16 entlang und erreicht dann das Gegenelement 17. Eine geeignete Kontur, insbesondere eine schräge Kontur, der Klinkenanordnung 34 sorgt dafür, dass die in Anlage an das Gegenelement 17 gekommene Klinkenanordnung 34 mit der weiteren Schwenkbewegung der Lehne 2 leicht aufschwenkt und auf der Unterseite des Gegenelementes 17 entlang gleitet. Hierbei wird die Klinkenanordnung 34 im Wesentlichen in einer starren Anordnung gehalten.

Nach dem Passieren eines Verriegelungsbolzens 18a, welcher zur Verringerung der Reibung vorliegend mit einem gleitgelagerten Ring 18b ausgebildet ist, und welcher samt Ring 18b ein Klinkenverriegelungselement 18 bilden, das gemäß dem ersten Ausführungsbeispiel einen Teil des mehrteilig ausgebildeten Gegenelementes 17 bildet, im Prinzip aber getrennt hiervon ausgebildet sein kann, springt für die Klinkenanordnung 34 die Anlagekontur radial zurück. Durch ihre Vorspannung infolge der Federkraft der Feder 36 fällt die Klinkenanordnung 34 nun hinter den vom Verriegelungsbolzen 18a getragenen Ring 18b mit zylinderförmiger Außenfläche - radial nach innen - ein und kontaktiert diesen mit einer hakenartigen Kontur, wobei ein linienförmiger Kontaktbereich C vorgesehen ist. Die Schwenkbewegung der Lehne 2 ist beendet und das Freischwenkteil 14 (und damit die Lehne 2) gegenüber dem Beschlagunterteil 16 festgelegt. Die vorgeschwenkte Lehne 2 befindet sich nun in der freigeschwenkten Stellung, welche einen ungehinderten Zugang zum Fond erlaubt. Zugleich befindet sich der Fahrzeugsitz 1 in einer vorderen Sitzlängsposition.

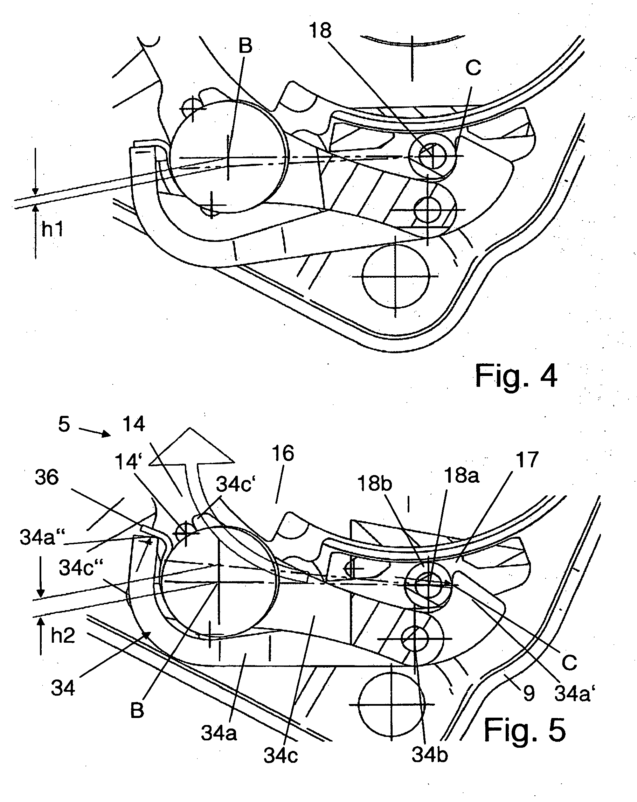

In diesem, in Fig. 4 dargestellten, unbelastet verriegelten Zustand der Lehne 2 ist die Klinkenanordnung 34 "starr", d.h. die Klinkenanordnung 34 wirkt wie eine einteilig ausgebildete Klinke, dadurch den in Fig. 4 dargestellten Versatz h1 des Drehmittelpunktes (Schwenkachse B) und der Senkrechten im Berührpunkt Klinke 34a - Ringaußenfläche (Kontaktbereich C) ein schließendes Moment (in Fig. 4 linksdrehend auf die Klinke 34a wirkend) ausgeübt wird, wodurch die Klinke 34a in Eingriff mit dem Gegenelement 17 gehalten wird, d.h. die Klinke 34a hat in diesem Zustand eine selbsthemmende Verriegelungskontur. Die Klinke 34a ist vorliegend mit mindestens einem Teilbereich beschlagaußenseitig der Schwenkachse B angeordnet.

Um in die zuvor eingenommene Gebrauchsstellung zurückzukehren, wird zunächst der Fahrzeugsitz 1 wieder nach hinten verfahren, beispielsweise durch Zug an der Lehne 2. Wenn die zuvor eingenommene Sitzlängsposition erreicht ist, liegt das an der Lehne 2 angreifende Moment vollständig an der Klinkenanordnung 34 an, wo es - wie nachfolgend beschrieben - öffnend wirkt.

Steigt bei einem Rückschwenken der Lehne 2 eine entsprechende Kraft auf den Endbereich 34a' der Klinke 34a, so wirkt ein Moment auf die Klinke 34a um die Lagerstelle 34a"'. Dieses Moment steigt so weit an, bis es größer ist als das Moment der Feder 36 um die Lagerstelle 34a"', so dass sich das Ende 34a" vom Vorsprung 34c" des Hebels 34c löst und sich die Klinkenanordnung 34 streckt, wie aus Fig. 5 ersichtlich. Durch die Streckung der Klinkenanordnung 34 aufgrund der Lehnenbelastung bildet die Senkrechte auf den Kontaktbereich C der Klinke 34a ein öffnendes Moment um den Klinkendrehpunkt, d.h. die Schwenkachse B, verursacht durch den Versatz h2.

Die aufzubringende Lehnenbelastung wird vordergründig durch die vorbestimmbare Kraft der Feder 36 und zweitrangig durch die Reibung im Ring 18b bestimmt.

Der mit zunehmender Lehnenbelastung sich verkleinernde Versatz h1 springt um in einen sich vergrößernden Versatz h2, und der Versatz h2 vergrößert sich weiter, bis ein ausreichendes, öffnendes Moment der Klinke 34a erreicht wird, um die Haftreibung des Lagers am Ring 18b zu überwinden. Bei nach oben streuender Haftreibung wird einfach die Lehnenbelastung und folgend die Federspannung weiter erhöht, und die Klinke 34a öffnet dann bei einem größeren Versatz h2 und gibt die Lehne 2 frei.

Die nicht dargestellte Verriegelungsklinke fällt bei Erreichen der zuvor eingenommene Gebrauchsstellung wieder in das Rastelement 16 ein, so dass das Freischwenkteil 14 und damit der Beschlag 5 wieder verriegelt ist.

Gemäß dem in der Zeichnung dargestellten Ausführungsbeispiel weist das Gegenelement 17 besagtes Klinken-Verriegelungselement 18 mit seinem Verriegelungsbolzen 18a und besagten Ring 18b auf, der auf dem Verriegelungsbolzen 18a reibungsarm gelagert ist. Daher muss für eine Relativbewegung der Klinke 34a zum Ring 18b keine Haftreibung (Gleitreibung) überwunden werden, sondern es erfolgt eine Art Abrollbewegung zwischen Klinke 34a und Ring 18b. Im Idealfall ist die Rollreibung vernachlässigbar klein.

Die Lagerung des Ringes 18b auf dem Verriegelungsbolzen 18a kann, wie vorstehend beschrieben, mittels eines Gleitlagers erfolgen, sie kann jedoch ebenfalls mittels eines Wälzlagers, beispielsweise eines Nadel- oder Kugellagers, erfolgen. Um die Reibung Klinke-Ring möglichst gering zu halten, weist der Verriegelungsbolzen 18a bevorzugt einen Außendurchmesser auf, welcher maximal halb so groß wie der Außendurchmesser des außen angeordneten Ringes 18b ist, um durch diese Unterstützung die Abhängigkeit von der Größe der Haftreibung zwischen dem Ring 18b und Verriegelungsbolzen 18a zu reduzieren.

Im Prinzip ist - bei geeigneter Ausgestaltung der aufeinandertreffenden Flächen - auch eine direkte Anlage der Klinke 34a an einer entsprechenden Außenfläche des Bolzens oder eines anderen Klinken-Verriegelungselements möglich, d.h. es kann ein Gleitlager im Kontaktbereich C zwischen Klinke und Klinken-Verriegelungselement vorgesehen sein, welches für eine ordnungsgemäße Funktionsweise der Klinkenanordnung jedoch einen niedrigen Haftreibungskoeffizienten haben sollte. Obwohl vorstehend eine am Freischwenkteil angeordnete Klinkenanordnung beschrieben ist, die mit einem am Beschlagunterteil angeordneten Gegenelement zusammenwirkt, kann auch eine kinematische Umkehr dieser Anordnung erfolgen, so dass eine beschlagunterteilfeste Klinkenanordnung mit einem freischwenkteilfesten Gegenelement zusammenwirkt. Auch in diesem Fall sind besonders bevorzugt rollende Relativbewegungen zwischen der Klinke der Klinkenanordnung und dem Gegenelement vorgesehen.

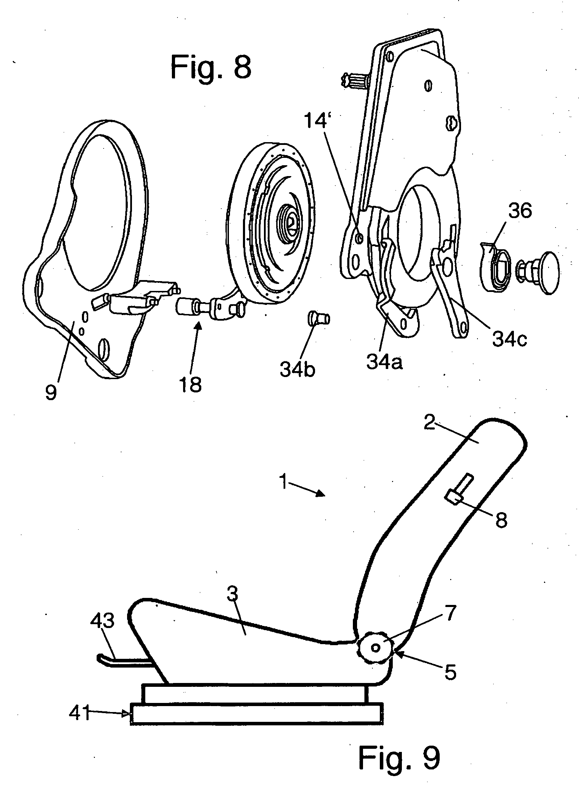

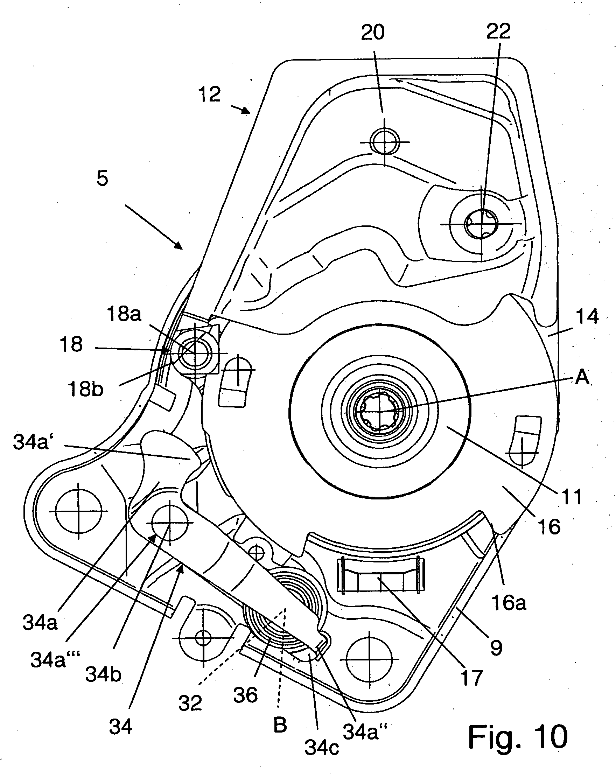

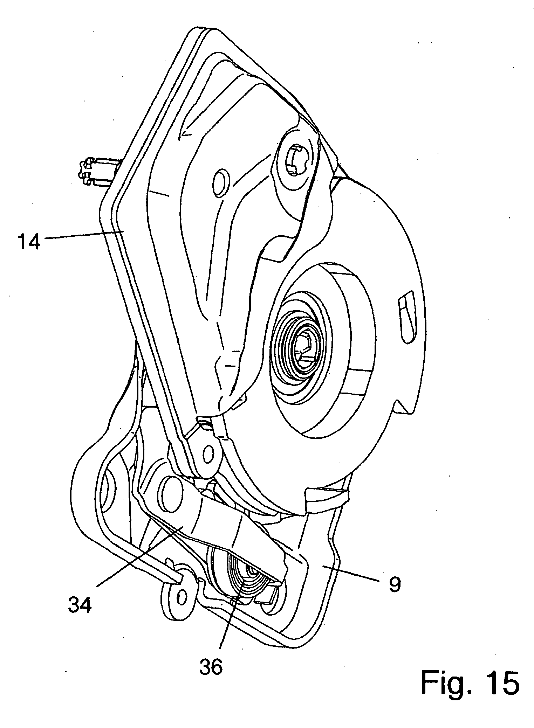

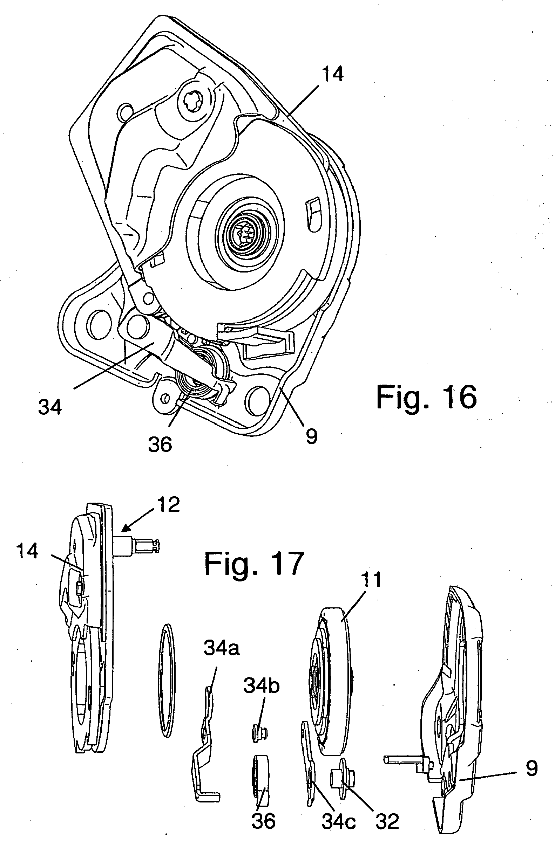

Im Folgenden wird unter Bezugnahme auf die Figuren 10 bis 17 das zweite Ausführungsbeispiel näher erläutert. Hierbei sind gleiche oder gleichwirkende Elemente mit den gleichen Bezugszeichen wie beim ersten Ausführungsbeispiel versehen. Die Anordnung an einem Fahrzeugsitz entspricht wiederum der Darstellung von Fig. 9.

Auch gemäß dem zweiten Ausführungsbeispiel weist jeder Beschlag 5 ein Beschlagunterteil 9, das zur Befestigung des Beschlags 5 an der Struktur des Sitzteils 3 dient, einen Lehnenneigungseinstellbeschlag, im folgenden kurz als Einstellbeschlag 11 bezeichnet, und eine Freischwenkeinheit 12 auf, welche ihrerseits ein Freischwenkteil 14 aufweist, das zur Befestigung des Beschlags 5 an der Struktur der Lehne 2 dient. Auf das Beschlagunterteil 9 und das Freischwenkteil 14 wird aufgrund ihrer Funktion beim Freischwenken auch als Beschlagteile Bezug genommen.

Der Einstellbeschlag 11 ist in baulicher Hinsicht entsprechend dem ersten Ausführungsbeispiel ausgebildet, so dass auf die Beschreibung gemäß dem ersten Ausführungsbeispiel verwiesen wird.

Die Freischwenkeinheit 12 weist - entsprechend dem ersten Ausführungsbeispiel - ein - näherungsweise ringförmiges - Rastelement 16 auf, relativ zu welchem das Freischwenkteil 14 um eine Achse A drehbar gelagert ist, wobei das Rastelement 16 mit dem diesem zugewandten Beschlagteil des Einstellbeschlags 11 drehfest verbunden, vorliegend verschweißt, ist. Die Achse A und ihre Lage innerhalb des Fahrzeugsitzes 1 definieren die vorliegend verwendeten Richtungsangaben. Da die Achse A - gegebenenfalls abgesehen von der Taumelbewegung - mit der zentralen Achse des Einstellbeschlags 11 zusammenfällt, handelt es sich vorliegend um ein zentrischen Freischwenken. Ein Gegenelement 17 ist am Beschlagunterteil 9 befestigt und steht von diesem axial ab. Das Rastelement 16 weist an einem Teil seines Umfangs eine radial nach innen versetzte, durch je eine Stufe begrenzte Aussparung 16a auf, innerhalb derer das Gegenelement 17 angeordnet ist. Durch Zusammenwirken des Gegenelementes 17 mit den Stufen des Rastelements 16 wird der Winkeleinstellbereich für die Neigungseinstellung der Gebrauchsstellung der Lehne 2 begrenzt. Das Rastelement 16 (und damit die Freischwenkeinheit 12) ist fest mit demjenigen der beiden Beschlagteile des Einstellbeschlags 11 verbunden, das nicht sitzteilfest ist. Die Verbindung der Freischwenkeinheit 12 mit dem Einstellbeschlag 11 erfolgt beispielsweise durch Laserschweißen.

Für die Lagerung des Freischwenkteils 14 weist das Rastelement 16 vorliegend einen bezüglich der Achse A axial abstehenden Kragen auf, auf welchem das Freischwenkteil 14 drehbar gelagert ist. Ein mit dem Freischwenkteil 14 verbundener Deckel 20 definiert einerseits einen Bauraum zwischen sich und dem über das Rastelement 16 nach oben überstehenden Freischwenkteil 14. Anderseits ist der untere Rand des Deckels 20 als Halteklammer ausgebildet und übergreift, gegebenenfalls unter Zwischenlage eines Gleiters, z.B. aus Kunststoff, das Rastelement 16. Der Deckel 20 dient somit als weitere axiale Sicherung des Freischwenkteils 14.

Auf dem Freischwenkteil 14 ist mittels eines ersten Lagerbolzens 22 eine - vorliegend nicht dargestellte - Verriegelungsklinke schwenkbar gelagert, welche mit dem Rastelement 16 verriegelbar ist. Diese Verriegelungsklinke verriegelt die Lehne in den Gebrauchsstellungen, also den nicht freigeschwenkten Stellungen. Eine derartige Verriegelungsklinke ist beispielsweise aus der DE 10 2006 044 489 A1 bekannt, deren diesbezüglicher Offenbarungsgehalt ausdrücklich einbezogen wird. Die Anlage der Verriegelungsklinke und des Rastelementes 16 erfolgt in einem Winkel außerhalb des Selbsthemmungsbereichs. Die Verriegelungsklinke wird durch ein Fangelement und ein Spannelement gesichert, die vorliegend nicht dargestellt sind und deren Funktionsweise in der DE 44 39 644 A1 beschrieben ist, deren diesbezüglicher Offenbarungsgehalt ausdrücklich einbezogen wird. Das Spannelement liegt mit einer exzentrisch gekrümmten Spannfläche in einem Winkel außerhalb des Selbsthemmungsbereichs mit Vorspannung an der Verriegelungsklinke an. Dadurch ist das Freischwenkteil 14 spielfrei mit dem Rastelement 16 verriegelt. Das Fangelement ist im Normalfall in geringem Abstand (bezogen auf die Abmessungen der Verriegelungsklinke) zur Verriegelungsklinke angeordnet und stützt im Crashfall die Verriegelungsklinke ab.

Auch bei diesem zweiten Ausführungsbeispiel sind die beiden Beschläge 5 auf den beiden Fahrzeugsitzseiten leicht unterschiedlich ausgebildet, indem auf einer Fahrzeugsitzseite eine Festlegung der Lehne 2 in der freigeschwenkten Stellung vorgesehen ist. Im folgenden ist der Beschlag 5 auf der letztgenannten Fahrzeugsitzseite weiter beschrieben.

Bei diesem Beschlag 5 ist am Beschlagunterteil 9 mittels eines zweiten Lagerbolzens 32 eine mehrteilige, knickhebelartig ausgebildete Klinkenanordnung 34 schwenkbar gelagert. Die Klinkenanordnung 34 weist eine Klinke 34a mit einem freien, hakenartig ausgebildeten Endbereich 34a', welches in Eingriff mit einem auf einem Verriegelungsbolzen 18a gelagerten Ring 18b gelangen kann, einem gegenüberliegenden Ende 34a", das mit einem Ende einer als Spiralfeder ausgebildeten Feder 36 in Verbindung steht und eine gelenkige Lagerstelle 34a'" auf, an welcher sie über einen Bolzen 34b mit einem die Klinke 34a tragenden Hebel 34c verbunden ist. Auch in diesem Fall wird auf die Gesamtheit von Verriegelungsbolzen 18a und Ring 18b als Klinken-Verriegelungselement 18 Bezug genommen.

Der Hebel 34c ist verschwenkbar an dem am Beschlagunterteil 9 angebrachten Lagerbolzen 32 gelagert. Der Lagerbolzen 32 weist hierbei einen Schaft mit vier Bereichen auf. Beschlagunterteilseitig weist er einen Befestigungsbereich mit einem etwa halbmondförmigen Querschnitt auf, mit welchem er auch drehfest in einer entsprechenden halbmondförmigen Öffnung am Beschlagunterteil 9 angebracht ist. Benachbart ist ein Lagerbereich mit einem etwas größeren, ebenfalls halbmondförmigen Querschnitt vorgesehen, auf welchem der Hebel 34c mit einer etwa 3/4-kreisförmigen Öffnung sitzt. Die (theoretische) Mittellängsachse des Lagerbolzens 32 bildet die Schwenkachse B des Hebels 34c. Im Unterschied zum ersten Ausführungsbeispiel wird die Schwenkbewegung des Hebels 34c um den Lagerbolzen 32 vorliegend durch die Gestalt der Öffnung im Beschlagunterteil 9 und nicht durch einen am Freischwenkteil ausgebildeten Anschlag begrenzt. Benachbart des Lagerbereichs des Lagerbolzens 32 ist ein kreisförmiger Flanschbereich vorgesehen, welcher den Lagerbereich für den Hebel 34c vom Federsitz trennt, auf welchem die spiralförmig gebogene Feder 36 derart positioniert ist, dass das innere Ende der Feder 36 lagerbolzenfest angeordnet ist, wobei das äußere Ende der Feder 36 nach außen hakenförmig umgebogen ist.

Der auf dem Lagerbolzen 32 gelagerte Hebel 34c weist am lagerbolzennahen Ende einen Vorsprung 34c' in Gestalt eines nach außen stehenden Arms auf, welcher eine Anlagefläche für das federseitige Ende 34a" der Klinke 34a bildet, und gegen die dieses Ende 34a" durch die Feder 36 vorgespannt ist. Der andere Endbereich des Hebels 34c weist eine Öffnung auf, in welcher der die Klinke 34a lagernde Bolzen 34b angeordnet ist, d.h. dieses Ende des Hebels 34c trägt die Klinke 34a. Die Feder 36 wirkt vorzugsweise mit einem möglichst großen Abstand zur Lagerstelle 34a"' auf das Ende 34a".

Die Klinkenanordnung 34 ist vorliegend aufgrund der Reibungskräfte bedingt frei beweglich in Bezug auf den Hebel 34c, wobei jedoch der Endbereich 34a' der Klinke 34a durch die Feder 36 relativ zum Hebel 34c in Richtung des Freischwenkteils 14 vorgespannt ist, auf welchem besagter Verriegelungsbolzen 18a mit seinem Ring 18b sitzen. Natürlich kann auch eine die Klinkenanordnung vorspannende zusätzliche Feder vorgesehen sein, um ein Klappern zu verhindern.

Im Folgenden wird auf die Funktion der Klinkenanordnung 34 näher eingegangen. Der Fahrzeugsitz 1 ist - entsprechend dem Fahrzeugsitz 1 gemäß dem ersten Ausführungsbeispiel - mittels eines Längseinstellers 41 längseinstellbar, d.h. in der Sitzlängsposition einstellbar. Der zwei Sitzschienenpaare aufweisende Längseinsteller 41 ist hierfür mittels eines Griffs 43 entriegelbar und verriegelt selbsttätig nach Loslassen des Griffs 43. Der Längseinsteller 41 wird aber auch beim Freischwenken der Lehne 2 entriegelt, so dass der Fahrzeugsitz 1 (mittels des Längseinstellers 41) nach vorne verfahrbar ist, um zusätzlich zum Freischwenken der Lehne 2 den Zugang zum Fond zu erleichtern. Das Entriegeln des Längseinstellers 41 erfolgt dabei direkt mittels des Freischwenk-Bedienelements 8 oder indirekt, indem beim Beschlag 5 auf der Fahrzeugsitzseite ohne Klinkenanordnung 34 ein Entriegelungsring vorsehen ist, welcher in an sich bekannter Weise beim Vorschwenken der Lehne 2 mitgenommen wird und dann mittels eines Bowdenzugs oder dergleichen die Verriegelung des Längseinstellers 41 ansteuert.

Das Freischwenken der Lehne 2, welches mittels des Freischwenk-Bedienelementes 8 ausgelöst wird, beginnt mit dem Entriegeln des Freischwenkteils 14 auf beiden Fahrzeugsitzseiten. Die nicht dargestellte Verriegelungsklinke wird aus dem Rastelement 16 ausgehoben. Mit der Schwenkbewegung der Lehne 2 nach vorne gelangt die Klinkenanordnung 34 mit ihrem freien Ende in Kontakt mit dem Verriegelungsbolzen 18a, welcher zur Verringerung der Reibung vorliegend mit einem gleitgelagerten Ring 18b ausgebildet ist.

Gelangt der Ring 18b in Anlage an die Klinkenanordnung 34, genauer gesagt den Endbereich 34a' der Klinke 34a, so sorgt eine schräge Kontur des Endes 34a' dafür, dass die Klinkenanordnung 34 - sofern nicht erfolgt - insgesamt um den am Beschlagunterteil 9 angebrachten Bolzen 32 schwenkt bis der Hebel 34c in seine entsprechende Endstellung gelangt, und anschließend die Klinke 34a entgegen der Kraft der Feder 36 aufschwenkt, d.h. das Ende 34a" den hakenförmigen Endbereich der Feder 36 weg vom Vorsprung 34c' des Hebels 34c bewegt.

Nach dem Passieren des Verriegelungsbolzens 18a, welcher zur Verringerung der Reibung vorliegend mit besagtem gleitgelagerten Ring 18b ausgebildet ist, springt für die Klinkenanordnung 34 die Anlagekontur radial zurück. Durch ihre Vorspannung infolge der Federkraft der Feder 36 fällt die Klinkenanordnung 34 nun hinter den vom Verriegelungsbolzen 18a getragenen Ring 18b mit zylinderförmiger Außenfläche - radial nach innen - ein und kontaktiert diesen mit einer hakenartigen Kontur, wobei ein linienförmiger Kontaktbereich C vorgesehen ist. Die Schwenkbewegung der Lehne 2 ist beendet und das Freischwenkteil 14 (und damit die Lehne 2) gegenüber dem Beschlagunterteil 16 festgelegt. Die vorgeschwenkte Lehne 2 befindet sich nun in der freigeschwenkten Stellung, welche einen ungehinderten Zugang zum Fond erlaubt. Zugleich befindet sich der Fahrzeugsitz 1 in einer vorderen Sitzlängsposition.

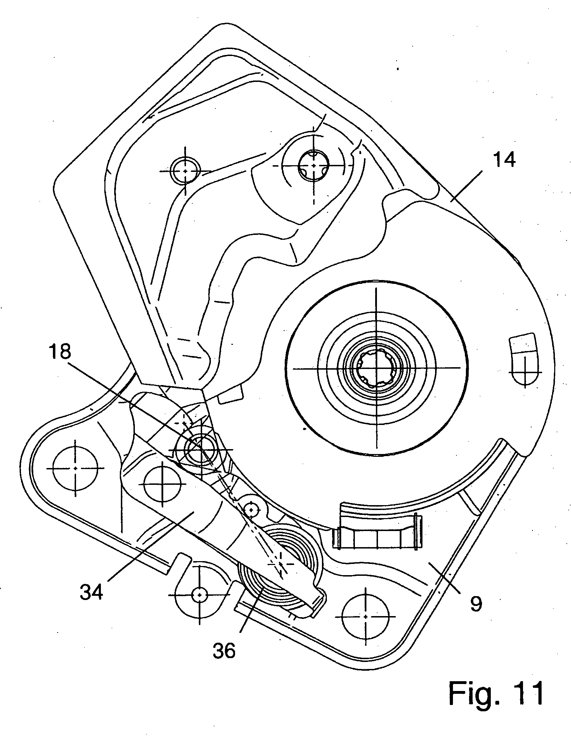

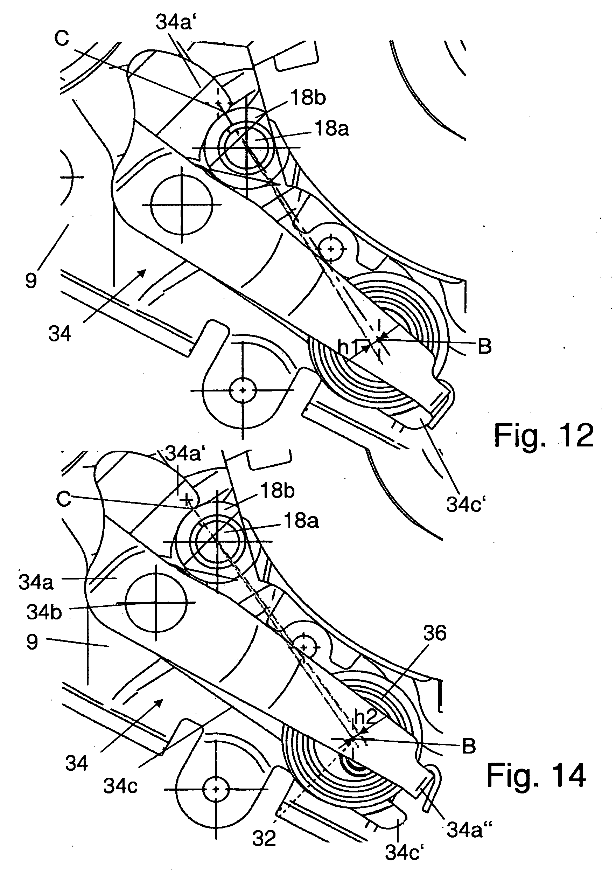

In diesem, in Fig. 11 und 12 dargestellten, unbelastet verriegelten Zustand der Lehne 2 ist die Klinkenanordnung 34 "starr", d.h. die Klinkenanordnung 34 wirkt wie eine einteilig ausgebildete Klinke, da durch den in Fig. 12 dargestellten Versatz h1 des Drehmittelpunktes (Schwenkachse B) und der Senkrechten im Berührpunkt Klinke 34a - Ringaußenfläche (Kontaktbereich C) ein schließendes Moment (in Fig. 12 rechtsdrehend auf die Klinke 34a wirkend) ausgeübt wird, wodurch die Klinke 34a in Eingriff mit dem Gegenelement 18 gehalten wird, d.h. die Klinke 34a hat in diesem Zustand eine selbsthemmende Verriegelungskontur. Die Klinke 34a ist vorliegend mit mindestens einem Teilbereich beschlagaußenseitig der Schwenkachse B angeordnet.

Um in die zuvor eingenommene Gebrauchsstellung zurückzukehren, wird zunächst der Fahrzeugsitz 1 wieder nach hinten verfahren, beispielsweise durch Zug an der Lehne 2. Wenn die zuvor eingenommene Sitzlängsposition erreicht ist, liegt das an der Lehne 2 angreifende Moment vollständig an der Klinkenanordnung 34 an, wo es - wie nachfolgend beschrieben - öffnend wirkt.

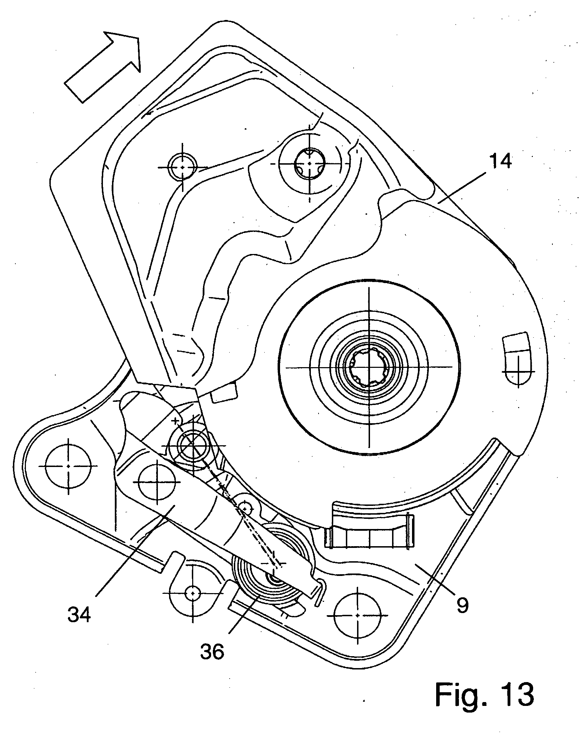

Steigt bei einem Rückschwenken der Lehne 2 die entsprechende Kraft auf den Endbereich 34a' der Klinke 34a, so wirkt ein Moment auf die Klinke 34a um die Lagerstelle 34a"'. Dieses Moment steigt so weit an, bis es größer ist als das Moment der Feder 36 um die Lagerstelle 34a"', so dass sich das Ende 34a" vom Vorsprung 34c' des Hebels 34c löst und sich die Klinkenanordnung 34 streckt, wie aus Fig. 13 und 14 ersichtlich. Durch die Streckung der Klinkenanordnung 34 aufgrund der Lehnenbelastung bildet die Senkrechte auf den Kontaktbereich C der Klinke 34a ein öffnendes Moment um den Klinkendrehpunkt, d.h. die Schwenkachse B, verursacht durch den Versatz h2. Durch Wahl der Lage der Feder 36 und der Federkonstanten lässt sich die erforderliche Kraft zum Öffnen der Klinkenanordnung 34 einstellen.

Die aufzubringende Lehnenbelastung wird vordergründig durch die vorbestimmbare Kraft der Feder 36 und zweitrangig durch die Reibung im Ring 18b bestimmt.

Der mit zunehmender Lehnenbelastung sich verkleinernde Versatz h1 springt um in einen sich vergrößernden Versatz h2, und der Versatz h2 vergrößert sich weiter, bis ein ausreichendes, öffnendes Moment der Klinke 34a erreicht wird, um die Haftreibung des Lagers am Ring 18b zu überwinden. Bei nach oben streuender Haftreibung wird einfach die Lehnenbelastung und folgend die Federspannung weiter erhöht, und die Klinke 34a öffnet dann bei einem größeren Versatz h2 und gibt die Lehne 2 frei.

Die nicht dargestellte Verriegelungsklinke fällt bei Erreichen der zuvor eingenommene Gebrauchsstellung wieder in das Rastelement 16 ein, so dass das Freischwenkteil 14 und damit der Beschlag 5 wieder verriegelt ist.

Gemäß den in der Zeichnung dargestellten Ausführungsbeispielen weist besagter Verriegelungsbolzen 18a besagten Ring 18b auf, der auf dem Verriegelungsbolzen 18a reibungsarm gelagert ist. Daher muss für eine Relativbewegung der Klinke 34a zum Ring 18b keine Haftreibung (Gleitreibung) überwunden werden, sondern es erfolgt eine Art Abrollbewegung zwischen Klinke 34a und Ring 18b. Im Idealfall ist die Rollreibung vernachlässigbar klein.

Die Lagerung des Ringes 18b auf dem Verriegelungsbolzen 18a kann, wie vorstehend beschrieben, mittels eines Gleitlagers erfolgen, sie kann jedoch ebenfalls mittels eines Wälzlagers, beispielsweise eines Nadel- oder Kugellagers, erfolgen. Um die Reibung Klinke-Ring möglichst gering zu halten, weist der Verriegelungsbolzen 18a bevorzugt einen Außendurchmesser auf, welcher maximal halb so groß wie der Außendurchmesser des außen angeordneten Ringes 18b ist, um durch diese Unterstützung die Abhängigkeit von der Größe der Haftreibung zwischen dem Ring 18b und Verriegelungsbolzen 18a zu reduzieren.

Im Prinzip kann jedoch auch auf eine zweiteilige Ausgestaltung des Klinkenverriegelungselements 18 verzichtet werden, insbesondere wenn eine besonders reibungarme Materialpaarung vorliegt.

In einer Abwandlung des ersten oder zweiten Ausführungsbeispieles hat der Sitz keinen Längseinsteller 41.

In einer weiteren Abwandlung des ersten oder zweiten Ausführungsbeispieles wird der vorhandene Längseinsteller 41 nicht beim Freischwenken der Lehne entriegelt.

### Bezugszeichenliste

- 1: Fahrzeugsitz
- 2: Lehne
- 3: Sitzteil
- 5: Beschlag
- 7: Handrad
- 8: Freischwenk-Bedienelement
- 9: Beschlagunterteil, Beschlagteil
- 11: Einstellbeschlag
- 12: Freischwenkeinheit
- 14: Freischwenkteil, Beschlagteil
- 14': Anschlag
- 16: Rastelement
- 16a: Aussparung
- 17: Gegenelement
- 18: Klinkenverriegelungselement
- 18a: Verriegelungsbolzen
- 18b: Ring
- 20: Deckel
- 22: erster Lagerbolzen
- 32: zweiter Lagerbolzen
- 34: Klinkenanordnung
- 34a: Klinke
- 34a': Endbereich
- 34a": Ende
- 34a"': Lagerstelle
- 34b: Bolzen
- 34c: Hebel
- 34c': erster Vorsprung, Vorsprung
- 34c": zweiter Vorsprung
- 36: Feder
- 41: Längseinsteller
- 43: Griff
- A: Achse
- B: Schwenkachse (Hebel 34c)
- C: Kontaktbereich (Linienkontakt Ring 18b-Klinke24a)
- h1: Versatz (unbelastete, freigeschwenkte Stellung)
- h2: Versatz (belastete, freigeschwenkten Stellung)

## Patentansprüche

1. Beschlag für einen Fahrzeugsitz, insbesondere für einen Kraftfahrzeugsitz, mit
einem Einstellbeschlag (11) zur Neigungseinstellung einer Lehne (2) des Fahrzeugsitzes (1) relativ zu einem Sitzteil (3) des Fahrzeugsitzes,
einer Freischwenkeinheit (12) zum zentrischen Freischwenken der Lehne (2) von wenigstens einer Gebrauchsstellung in eine freigeschwenkte Stellung um eine Achse (A),
einem Beschlagunterteil (9), das ein mit dem Sitzteil (3) zu verbindendes Beschlagteil ist, und das den Einstellbeschlag (11) trägt,
einem Freischwenkteil (14), das ein der Freischwenkeinheit (12) zugeordnetes Beschlagteil ist, und das mit der Lehne (2) zu verbinden und das in der Gebrauchsstellung verriegelt ist, und
einer Klinkenanordnung (34), die schwenkbar an einem der Beschlagteile (9 oder 14) angeordnet ist und das Freischwenkteil (14) in der freigeschwenkten Stellung der Lehne (2) mittels Zusammenwirkens mit einem am anderen Beschlagteil (14 oder 9) ausgebildeten Gegenelement (17) festlegt,
**dadurch gekennzeichnet, dass**
die Klinkenanordnucnlg (34) eine Schwenkachse (B) aufweist,
die Klinkenanordnung (34) ferner eine Klinke (34a) und einen Hebel (34c) aufweist, die relativ zueinander um eine von der Schwenkachse (B) beabstandete Achse verschwenkbar sind,
die Klinke (34a) in einem Endbereich (34a') hakenartig konturiert ausgebildet ist und mit einem Klinken-Verriegelungselement (18) in der freigeschwenkten Stellung der Lehne (2) zum Verriegeln in einem punkt- oder linienförmigen Kontaktbereich (C) in Eingriff ist, und die Klinke (34a), insbesondere das andere Ende (34a") der Klinke (34a), mit einer Feder (36) zusammenwirkt,
der Hebel (34c) im Bereich eines ersten Endes verschwenkbar um die Schwenkachse (B) gelagert ist und im Bereich seines gegenüberliegenden zweiten Endes die Klinke (34a) drehbar lagert, wobei
die Senkrechte im Kontaktbereich (C) in der unbelasteten freigeschwenkten Stellung auf einer Seite der Schwenkachse (B) oder durch die Schwenkachse (B) verläuft, wodurch ein die Klinke (34a) schließendes Moment bzw. kein Moment erzeugt wird, und
die Senkrechte im Kontaktbereich (C) bei Auferlegung einer Rückschwenkkraft auf die Lehne (2) in der freigeschwenkten Stellung auf der gegenüberliegenden Seite bzw. außerhalb der Schwenkachse (B) verläuft, wodurch ein die Klinke (34a) öffnendes Moment erzeugt wird.

2. Beschlag nach Anspruch 1, **dadurch gekennzeichnet, dass** die Feder (36) als Spiralfeder ausgebildet und um die Schwenkachse (B) angeordnet ist.

3. Beschlag nach Anspruch 1 oder 2, **dadurch gekennzeichnet, dass** die Feder (36) an ihrem die Klinkenanordnung (34) beaufschlagenden freien Ende nach außen gebogen ist und am dem hakenartigen Endbereich (34a') gegenüberliegenden Ende (34a") der Klinke (34a) anliegt, und dass der Hebel (34c) mindestens einen Vorsprung (34c') aufweist, welcher mit dem Ende (34a") der Klinke (34a) in Kontakt gelangen kann.

4. Beschlag nach einem der vorhergehenden Ansprüche, **dadurch gekennzeichnet, dass** ein Teil des Klinken-Verriegelungselements (18) ein Verriegelungsbolzen (18a) ist, der einen gleit- oder wälzlagergelagerten Ring (18b) trägt, mit dem die Klinke (34a) zusammenwirkt.

5. Beschlag nach einem der vorhergehenden Ansprüche, **dadurch gekennzeichnet, dass** die Relativbewegung der Klinkenanordnung (34) mit ihrer Klinke (34a) und dem Klinken-Verriegelungselement (18) zum Lösen der Verriegelung der freigeschwenkten Stellung eine Wälzbewegung ist.

6. Beschlag nach einem der vorhergehenden Ansprüche, **dadurch gekennzeichnet, dass** die Klinkenanordnung (34) eine hakenartige Kontur zum Hintergreifen des Klinken-Verriegelungselements (18) aufweist.

7. Beschlag nach einem der vorhergehenden Ansprüche, **dadurch gekennzeichnet, dass** die Klinkenanordnung (34) beim Zusammenwirken mit dem Klinken-Verriegelungselement (18) im unbelasteten Zustand selbsthemmend hieran anliegt, und unter öffnender Last aufgrund der Streckung der Klinkenanordnung (34) in einen nicht selbsthemmenden Zustand hieran anliegt.

8. Beschlag nach einem der vorhergehenden Ansprüche, **dadurch gekennzeichnet, dass** bei einer beschlagunterteilfesten Klinkenanordnung (34) der Endbereich (34a') der Klinke (34a) während des Freischwenkens der Lehne (2) an einem Bauteil der Freischwenkeinheit (12) entlang gleitet bis zum Erreichen des Klinken-Verriegelungselements (18), und der Endbereich (34a') der Klinke (34a) beim Freischwenken der Lehne (2) in Anlage an das Klinken-Verriegelungselement (18) kommt, die in Anlage an das Klinken-Verriegelungselement (18) gekommene Klinkenanordnung (34) mit der weiteren Schwenkbewegung der Lehne (2) aufschwenkt und am Klinken-Verriegelungselement (18) entlang gleitet, bis sie das Klinken-Verriegelungselement (18) passiert und dahinter verriegelnd aufgrund der Federvorspannung der Feder (36) einfällt.

9. Beschlag nach einem der vorhergehenden Ansprüche, **dadurch gekennzeichnet, dass** beim Belasten der Klinke (34a) im hinter dem Klinken-Verriegelungselement (18) verriegelten Zustand vor dem Lösen der Klinke (34a) eine Relativbewegung zwischen der Klinke (34a) und dem die Klinke (34a) tragenden Hebelarm (34c) erfolgt.

10. Fahrzeugsitz (1) mit einer neigungseinstellbaren und freischwenkbaren Lehne (2), **gekennzeichnet durch** wenigstens einen Beschlag (5) nach einem der vorhergehenden Ansprüche zur Neigungseinstellung und zum Freischwenken der Lehne (2).

## Claims

1. Fitting for a vehicle seat, in particular for a motor vehicle seat, with
an adjustment fitting (11) for the inclination adjustment of a backrest (2) of the vehicle seat (1) relative to a seat part (3) of the vehicle seat,
a free-pivoting unit (12) for the central free-pivoting of the backrest (2) from at least one use position into a freely pivoted position about an axis (A),
a fitting lower part (9) which is a fitting part to be connected to the seat part (3) and which bears the adjustment fitting (11),
a free-pivoting part (14) which is a fitting part assigned to the free-pivoting unit (12) and which is to be connected to the backrest (2) and which is locked in the use position, and
a catch arrangement (34) which is arranged pivotably on one of the fitting parts (9 or 14) and fixes the free-pivoting part (14) in the freely pivoted position of the backrest (2) by means of interaction with a mating element (17) formed on the other fitting part (14 or 9),
**characterized in that**
the catch arrangement (34) has a pivot axis (B),
the catch arrangement (34) furthermore has a catch (34a) and a lever (34c), which are pivotable relative to each other about an axis spaced apart from the pivot axis (B),
the catch (34a) is of contoured design in the manner of a hook in an end region (34a') and is in engagement in a punctiform or linear contact region (C) with a catch locking element (18) in the freely pivoted position of the backrest (2) for locking purposes, and the catch (34a), in particular the other end (34a") of the catch (34a), interacts with a spring (36),
the lever (34c), in the region of a first end, is mounted pivotably about the pivot axis (B) and, in the region of its opposite, second end, rotatably supports the catch (34a), wherein,
in the unloaded, freely pivoted position, the perpendicular in the contact region (C) runs on one side of the pivot axis (B) or through the pivot axis (B), as a result of which a torque closing the catch (34a) is produced or no torque is produced and,
when a pivoting-back force is applied to the backrest (2) in the freely pivoted position, the perpendicular in the contact region (C) runs on the opposite side or outside the pivot axis (B), as a result of which a torque opening the catch (34a) is produced.

2. Fitting according to Claim 1, **characterized in that** the spring (36) is designed as a spiral spring and is arranged about the pivot axis (B).

3. Fitting according to Claim 1 or 2, **characterized in that** the spring (36) is bent outward at its free end acting upon the catch arrangement (34) and bears against that end (34a") of the catch (34a) which is opposite the hook-like end region (34a'), and **in that** the lever (34c) has at least one projection (34c') which can come into contact with the end (34a") of the catch (34a).

4. Fitting according to one of the preceding claims, **characterized in that** part of the catch locking element (18) is a locking pin (18a) which bears a ring (18b) which is mounted on a sliding bearing or rolling bearing and with which the catch (34a) interacts.

5. Fitting according to one of the preceding claims, **characterized in that** the relative movement of the catch arrangement (34) with its catch (34a) and the catch locking element (18) in order to release the locking of the freely pivoted position is a rolling movement.

6. Fitting according to one of the preceding claims, **characterized in that** the catch arrangement (34) has a hook-like contour for engaging behind the catch locking element (18).

7. Fitting according to one of the preceding claims, **characterized in that**, upon interaction with the catch locking element (18) in the unloaded state, the catch arrangement (34) bears on the latter in a self-locking manner and bears on the latter under an opening load on account of the catch arrangement (34) stretching into a non-self-locking state.

8. Fitting according to one of the preceding claims, **characterized in that**, when the catch arrangement (34) is fixed on the fitting lower part, the end region (34a') of the catch (34a) slides, during the free-pivoting of the backrest (2), along a component of the free-pivoting unit (12) until it reaches the catch locking element (18), and, during the free-pivoting of the backrest (2), the end region (34a') of the catch (34a) comes into contact with the catch locking element (18), the catch arrangement (34) which has come into contact with the catch locking element (18) pivots upward with the further pivoting movement of the backrest (2) and slides along the catch locking element (18) until it passes the catch locking element (18) and drops therebehind in a locking manner owing to the prestressing of the spring (36).

9. Fitting according to one of the preceding claims, **characterized in that**, during the loading of the catch (34a) in the locked state behind the catch locking element (18), before the catch (34a) is released a relative movement takes place between the catch (34a) and the lever arm (34c) bearing the catch (34a).

10. Vehicle seat (1) with an inclination-adjustable and freely pivotable backrest (2), **characterized by** at least one fitting (5) according to one of the preceding claims for the inclination adjustment and for the free-pivoting of the backrest (2).

## Revendications

1. Ferrure pour un siège de véhicule, notamment pour un siège de véhicule automobile, avec :
une ferrure de réglage (11) pour le réglage d'inclinaison d'un accoudoir (2) du siège de véhicule (1) par rapport à une partie de siège (3) du siège de véhicule ;
une unité de libre pivotement (12) pour le libre pivotement central de l'accoudoir (2) d'au moins une position d'utilisation dans une position de libre pivotement autour d'un axe (A) ;
une partie inférieure de ferrure (9) qui est une partie de ferrure à relier à la partie de siège (3) et qui supporte la ferrure de réglage (11) ;
une partie de libre pivotement (14) qui est la partie de ferrure associée à l'unité de libre pivotement (12), qui doit être reliée à l'accoudoir (2) et qui est verrouillée dans la position d'utilisation ; et
un agencement de loquet (34) disposé de façon à pouvoir pivoter au niveau d'une des parties de ferrure (9 ou 14) et qui fixe la partie de libre pivotement (14) dans la position de libre pivotement de l'accoudoir (2) en interagissant avec un contre-élément (17) réalisé au niveau de l'autre partie de ferrure (14 ou 9) ;
**caractérisée en ce que** :
l'agencement de loquet (34) comporte un axe de pivotement (B) ;
l'agencement de loquet (34) comporte en outre un loquet (34a) et un levier (34c) pouvant pivoter l'un par rapport à l'autre autour d'un axe placé à une certaine distance de l'axe de pivotement (B) ;
le loquet (34a) est réalisé avec un contour de type crochet dans une zone d'extrémité (34a') et est en prise avec un élément de verrouillage de loquet (18) dans la position de libre pivotement de l'accoudoir (2) pour réaliser le verrouillage dans une zone de contact (C) en forme de point ou de ligne et le loquet (34a), notamment l'autre extrémité (34a") du loquet (34a), interagissant avec un ressort (36) ;
le levier (34c) est disposé dans la zone d'une première extrémité de façon à pouvoir pivoter autour de l'axe de pivotement (B) et le loquet (34a) est disposé de façon à pouvoir pivoter dans la zone de la deuxième extrémité opposée du levier ;
la perpendiculaire s'étendant dans la zone de contact (C), dans la position de libre pivotement non sollicitée, sur un côté de l'axe de pivotement (B) ou à travers l'axe de pivotement (B), un couple fermant le loquet (34a) et/ou aucun couple n'étant produit ; et
la perpendiculaire s'étendant dans la zone de contact (C), lors de l'application d'une force de pivotement en arrière sur l'accoudoir (2), dans la position de libre pivotement, sur le côté opposé et/ou à l'extérieur de l'axe de pivotement (B), produisant ainsi un couple ouvrant le loquet (34a).

2. Ferrure selon la revendication 1, **caractérisée en ce que** le ressort (36) prend la forme d'un ressort à spirale et est disposé autour de l'axe de pivotement (B).

3. Ferrure selon la revendication 1 ou 2, **caractérisée en ce que** le ressort (36) est incurvé vers l'extérieur au niveau de son extrémité libre sollicitant l'agencement de loquet (34) et repose contre l'extrémité opposée (34a") à la zone d'extrémité (34a') de type crochet du loquet (34a) et que le levier (34c) comporte au moins une saillie (34c') pouvant entrer au contact de l'extrémité (34a") du loquet (34a) .

4. Ferrure selon l'une quelconque des revendications précédentes, **caractérisée en ce qu'**une partie de l'élément de verrouillage de loquet (18) est un boulon de verrouillage (18a) supportant une bague (18b) disposée dans un palier de glissement ou de roulement avec lequel le loquet (34a) interagit.

5. Ferrure selon l'une quelconque des revendications précédentes, **caractérisée en ce que** le mouvement relatif de l'agencement de loquet (34) avec son loquet (34a) et l'élément de verrouillage de loquet (18) est un mouvement de roulement permettant de libérer le verrouillage de la position de libre pivotement.

6. Ferrure selon l'une quelconque des revendications précédentes, **caractérisée en ce que** l'agencement de loquet (34) comporte un contour de type crochet permettant d'engrener par l'arrière l'élément de verrouillage de loquet (18).

7. Ferrure selon l'une quelconque des revendications précédentes, **caractérisée en ce que** l'agencement de loquet (34) repose de façon autobloquante contre l'élément de verrouillage de loquet (18) lors de l'interaction avec lui, à l'état non sollicité, et repose contre lui dans un état non autobloqué lorsqu'une charge d'ouverture s'exerce, en raison de l'extension de l'agencement de loquet (34).

8. Ferrure selon l'une quelconque des revendications précédentes, **caractérisée en ce qu'**en cas d'agencement de loquet (34) fixé à la partie inférieure de ferrure, la zone d'extrémité (34a') du loquet (34a) glisse en longueur au niveau d'un composant de l'unité de libre pivotement (12) pendant le libre pivotement de l'accoudoir (2) jusqu'à atteindre l'élément de verrouillage de loquet (18) et que la zone d'extrémité (34a') du loquet (34a) vient à appuyer contre l'élément de verrouillage de loquet (18) lors du libre pivotement de l'accoudoir (2), l'agencement de loquet (34) venant à appuyer contre l'élément de verrouillage de loquet (18) pivote avec le mouvement de pivotement supplémentaire de l'accoudoir (2) et glisse en longueur au niveau de l'élément de verrouillage de loquet (18) jusqu'à passer l'élément de verrouillage de loquet (18) et entrer dedans avec verrouillage du fait de la précontrainte de ressort du ressort (36).

9. Ferrure selon l'une quelconque des revendications précédentes, **caractérisée en ce qu'**un mouvement relatif entre le loquet (34a) et le bras de levier (34c) supportant le loquet (34a) se produit avant la libération du loquet (34a) lorsque le loquet (34a) est sollicité à l'état verrouillé derrière l'élément de verrouillage de loquet (18).

10. Siège de véhicule (1) avec un accoudoir (2) à inclinaison réglable et libre pivotement, **caractérisé par** la présence d'au moins une ferrure (5) selon l'une quelconque des revendications précédentes prévue pour le réglage d'inclinaison et pour le libre pivotement de l'accoudoir (2).
